# EUROPÄISCHE PATENTSCHRIFT

(11) **EP 1 147 944 B1**
(45) Veröffentlichungstag und Bekanntmachung des Hinweises auf die Patenterteilung: **14.05.2008**
(21) Anmeldenummer: 01108790.5
(22) Anmeldetag: 07.04.2001
(51) Int. Cl.: B60R 16/02, B60H 1/00, H02J 7/35, H02M 3/00

(54) **Solareinrichtung für ein Fahrzeug**
Solar energy installation for vehicle
Installation d'énergie solaire pour véhicule

(30) Priorität: 20.04.2000 DE 10019889
(43) Veröffentlichungstag der Anmeldung: 24.10.2001
(73) Patentinhaber: Webasto AG, 82131 Stockdorf (DE)
(72) Erfinder: Ganz, Thomas, 82152 Krailling (DE)
(74) Vertreter: Konnerth, Dieter Hans

(56) Entgegenhaltungen:
- EP-A- 0 652 137
- EP-A- 0 846 589
- DE-A1- 19 618 882

## Beschreibung

Die vorliegende Erfindung betrifft eine Solareinrichtung für ein Fahrzeug, insbesondere einen Solardeckel, gemäß dem Oberbegriff von Anspruch 1.

Aus der DE 198 39 711 ist eine solche gattungsgemäße Solareinrichtung bekannt, bei welcher der DC/DC-Wandler zwei unterschiedliche Ausgänge aufweist, die zu einem Gebläsemotor bzw. zu der Fahrzeugbatterie führen, wobei der DC/DC-Wandler mit einer Batterieladefunktion versehen ist, die bewirkt, dass ein fester Grundbetrag der von dem Solargenerator erzeugten elektrischen Leistung der Fahrzeugbatterie zugeführt wird und der diesen Grundbetrag übersteigende Betrag der von dem Solargenerator erzeugten elektrischen Leistung dem Gebläsemotor zugeführt wird. Wie die Impedanzanpassung an zwei Verbraucher mit unterschiedlicher Impedanz, d.h. der Fahrzeugbatterie und dem Lüftermotor, im Detail erfolgen soll, wird dort nicht näher erläutert.

Aus der EP 0 861 746 A1 ist eine ähnliche Solareinrichtung bekannt, bei welcher das Umschalten zwischen der Versorgung der Fahrzeugbatterie und eines Lüftermotors automatisch erfolgt, wobei die automatische Umschaltung durch einen manuell betätigbaren Schalter übersteuerbar ist. Auch hier sind für die Fahrzeugbatterie und den Lüftermotor getrennte Ausgänge vorgesehen. Es finden sich keine Details bezüglich der Impedanzanpassung.

Aus der DE 36 10 767 A1 ist eine Solareinrichtung für ein Kraftfahrzeug bekannt, bei welcher der Solargenerator mindestens zwei Solarzelleneinheiten umfasst, die mittels eines Umschalters für das Batterienachladen in Reihe geschaltet und für die Versorgung eines Lüftergebläses parallel geschaltet werden können. Ein Impedanzwandler ist hier nicht vorgesehen.

Aus der DE 195 27 740 C1 ist es bekannt, bei einer Solareinrichtung für ein Kraftfahrzeug durch wahlweises Parallelschalten oder Reihenschalten von Solarzellenstrings eine Impedanzanpassung vorzunehmen, um wahlweise einen Lüftermotor zu betreiben oder die Fahrzeugbatterie nachzuladen.

Es ist Aufgabe der vorliegenden Erfindung, eine Solareinrichtung für ein Fahrzeug zu schaffen, welche auf möglichst einfache Weise mit möglichst wenig Anschlusskontakten eine impedanzangepasste Versorgung sowohl eines Verbrauchers im Fahrzeug als auch der Fahrzeugbatterie erlaubt.

Diese Aufgabe wird erfindungsgemäß gelöst durch eine Solareinrichtung gemäß Anspruch 1. Bei dieser Lösung ist vorteilhaft, dass die Impedanzwandlereinheit mit nur einem Ausgang auskommt und dennoch eine optimierte Impedanzanpassung sowohl für die Versorgung des Verbrauchers als auch der Batterie ermöglicht. Dadurch kann die Zahl der erforderlichen elektrischen Kontakte auf ein Minimum beschränkt werden und durch die Integration der beiden Impedanzwandler zu einer einzigen Einheit können Kosten und Bauraum eingespart werden. Ferner kann die Einbindung in das Fahrzeug sehr flexibel gestaltet werden, da im Fahrzeug fast keine zusätzlichen Komponenten erforderlich sind.

Bevorzugte Ausgestaltungen der Erfindung ergeben sich aus den Unteransprüchen.

Im folgenden wird die Erfindung anhand der beigefügten Zeichnungen beispielhaft näher erläutert, wobei:
- Fig. 1: schematisch die Verschaltung einer erfindungsgemäßen Solareinrichtung gemäß einer ersten Ausführungsform zeigt;
- Fig. 2: die schematische Verschaltung einer erfindungsgemäßen Solareinrichtung gemäß einer zweiten Ausführungsform zeigt; und
- Fig. 3: die schematische Verschaltung einer erfindungsgemäßen Solareinrichtung gemäß einer dritten Ausführungsform zeigt.

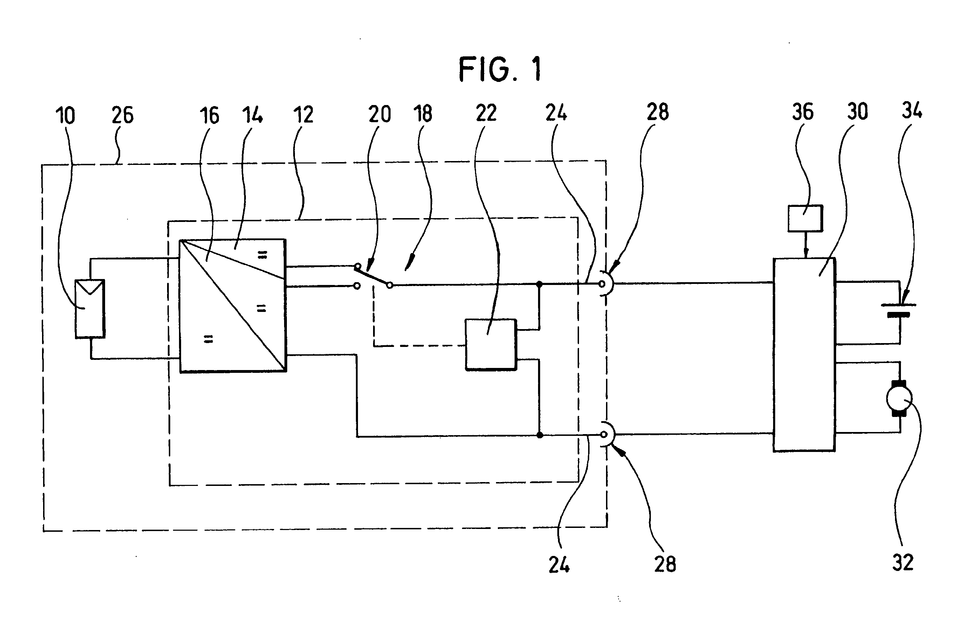

Fig. 1 zeigt schematisch die Verschaltung einer Solareinrichtung für ein Kraftfahrzeug, wobei ein Solargenerator 10 mit einer DC/DC-Wandlereinheit 12 verbunden ist, die einen Abwärtswandler 14 und einen Aufwärtswandler 16 sowie eine Umschalteinheit 18 umfasst. Die Umschalteinheit 18 umfasst einen Schalter 20 sowie eine Komparatoreinheit 22, welche die Spannung an dem Ausgang 24 der Wandlereinheit 12 erfasst und den Schalter 20 in Abhängigkeit von dieser erfassten Spannung betätigt. Der Schalter 20 schaltet den Ausgang 24 der Wandlereinheit 12 auf den Ausgang des Abwärtswandlers 14 bzw. den Ausgang des Aufwärtswandlers 16.

Alle bisher genannten Komponenten sind in einen Solardeckel 26 eines Kraftfahrzeugs integriert, wobei der zweipolige Ausgang 24 der Wandlereinheit 12 über sogenannte Solarkontakte 28 in elektrischem Kontakt mit einer nachfolgend beschriebenen fahrzeugfesten Elektronik steht, welche eine Steuereinheit 30, die beispielsweise von einem Klimasteuergerät gebildet wird, einen Motor 32 für einen Fahrzeuginnenraumlüfter, die Fahrzeugbatterie 34 sowie einen Temperatursensor 36 umfasst, welcher die Temperatur im Fahrzeuginnenraum misst. Die Steuereinheit 30 wird von dem Sensor 36 mit Temperaturinformationen versorgt und kann ferner durch Messung des Ladestroms bzw. der Spannung an der Batterie 34 den Zustand der Batterie 34 erfassen. Das Steuergerät 30 ist so ausgebildet, dass es die über die Solarkontakte 28 abgegebene, von dem Solargenerator 10 erzeugte Solarleistung nach vorgegebenen Kriterien, insbesondere in Abhängigkeit von der erfassten Fahrzeuginnenraumtemperatur und dem Zustand der Batterie 34, an die Batterie 34 bzw. den Lüftermotor 32 schickt. Diese Kriterien können beispielsweise so gewählt werden, dass oberhalb einer bestimmten Schwelltemperatur der Lüftermotor 32 mit der Solarleistung beaufschlagt wird, wenn die Fahrzeugbatterie 34 noch in hinreichend gutem Zustand ist. Bei schlechtem Batteriezustand wird dann die erzeugte Solarleistung ausschließlich zu der Batterie 34 geleitet.

Der Schaltzustand der Steuereinheit 30, d.h. je nachdem, ob die Batterie 34 oder der Lüftermotor 32 mit den Solarkontakten 28 verbunden ist, bestimmt die an dem Ausgang 24 der Wandlereinheit 12 liegende und von der Komparatoreinheit 22 erfasste Spannung. In Abhängigkeit von der erfassten Spannung an dem Ausgang 24 schaltet die Komparatoreinheit 22 durch Betätigung des Schalters 20 den Abwärtswandler 14 oder den Aufwärtswandler 16 auf den Ausgang 24. Der Abwärtswandler 14 ist dabei hinsichtlich einer Impedanzanpassung zwischen Solargenerator 10 und Lüftermotor 32 optimiert, während der Aufwärtswandler 16 hinsichtlich der Impedanzanpassung zwischen Solargenerator 10 und Batterie 34 optimiert ist. Auf diese Weise kann sowohl für die Batterie 34 als auch für den Lüftermotor 32 eine optimale Impedanzanpassung bezüglich des Solargenerators 10 erzielt werden. Die Komparatoreinheit 22 kann beispielsweise so ausgebildet sein, dass sie bei einer an dem Ausgang 24 erfassten Spannung von 0 V bis etwa zur halben Bordnetz - Nennspannung den Ausgang 24 auf den Abwärtswandler 14 schaltet, während sie bei einer an dem Ausgang 24 erfassten Spannung von etwa der halben Bordnetz - Nennspannung bis zur maximal zulässigen Spannung den Ausgang 24 auf den Aufwärtswandler 16 schaltet, wobei für eine gewisse Hysterese zwischen beiden Spannungsbereichen zu sorgen ist, um ein sicheres Ansprechen des Komparators zu gewährleisten. So können bei einem 12 V - Bordnetz zum Beispiel der erste Spannungsbereich von 0 bis 6 V und der zweite Spannungsbereich von 8 bis 14 V reichen. Entsprechend angepaßte Werte sind bei anderen Bordnetzen, beispielsweise 24 V oder 42 V Bordnetzen, zu wählen.

Bei dem Deckel 26 kann es sich beispielsweise um den Deckel eines Schiebe-, Schiebehebe- oder Spoilerdaches handeln.

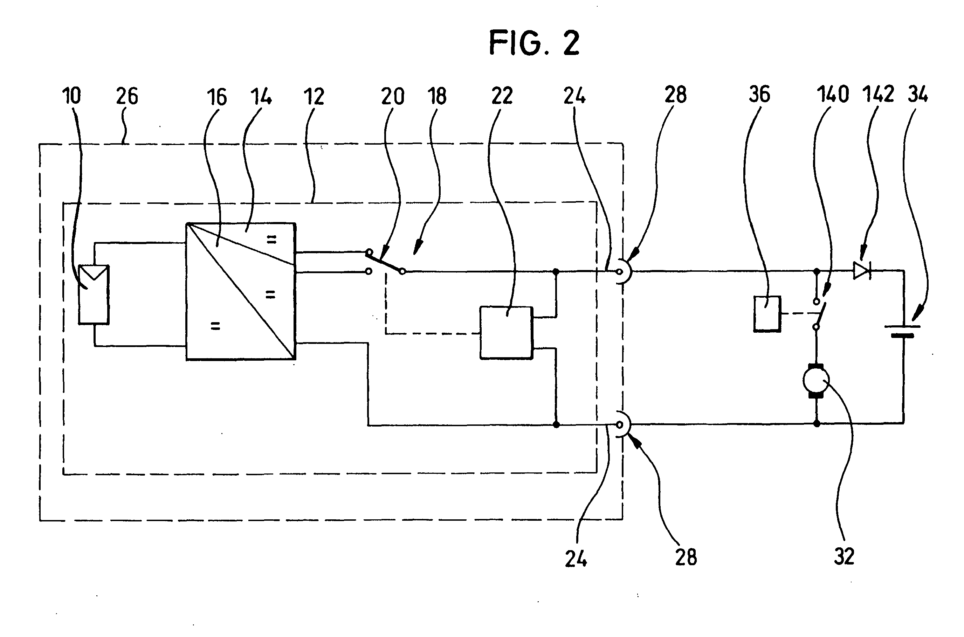

In Fig. 2 ist eine Abwandlung der Ausführungsform von Fig. 1 gezeigt, wobei die deckelseitige Elektronik unverändert bleibt, während die fahrzeugfeste Elektronik im wesentlichen dadurch abgewandelt ist, dass keine Steuereinheit 30 vorgesehen ist, sondern deren Schaltfunktion von einem Schalter 140 und einer Diode 142 übernommen wird. Der Lüftermotor 32 und die Fahrzeugbatterie 34 sind im Gegensatz zu Fig. 1 in Parallelschaltung angeordnet, wobei der Schalter 140 im Pfad des Lüftermotors 32 vorgesehen ist und die Diode 142 im Pfad der Batterie 34 vorgesehen ist. Der Schalter 142 wird in Abhängigkeit von der mittels eines Temperatursensors 36 erfassten Temperatur im Fahrzeuginnenraum betätigt. Die Diode 142 ist als Sperrdiode vorgesehen, die so gepolt und dimensioniert ist, dass eine Entladung der Batterie 34 über den Lüftermotor 32 und den Solargenerator 10 verhindert wird, wobei die Diode 142 als Rückstromschutz dient. Die Diode 142 muss dabei nur auf den Ladestrom ausgelegt werden. Bei der Ausführungsform gemäß Fig. 2 wird die Batterie 34 in allen Fällen geladen, in welchen der Lüftermotor 32 nicht mit den Solarkontakten 28 verbunden ist, d.h. wenn der Schalter 140 geöffnet ist. Die Anbindung des Gebläses für den normalen Fahrbetrieb ist vorliegend nicht dargestellt.

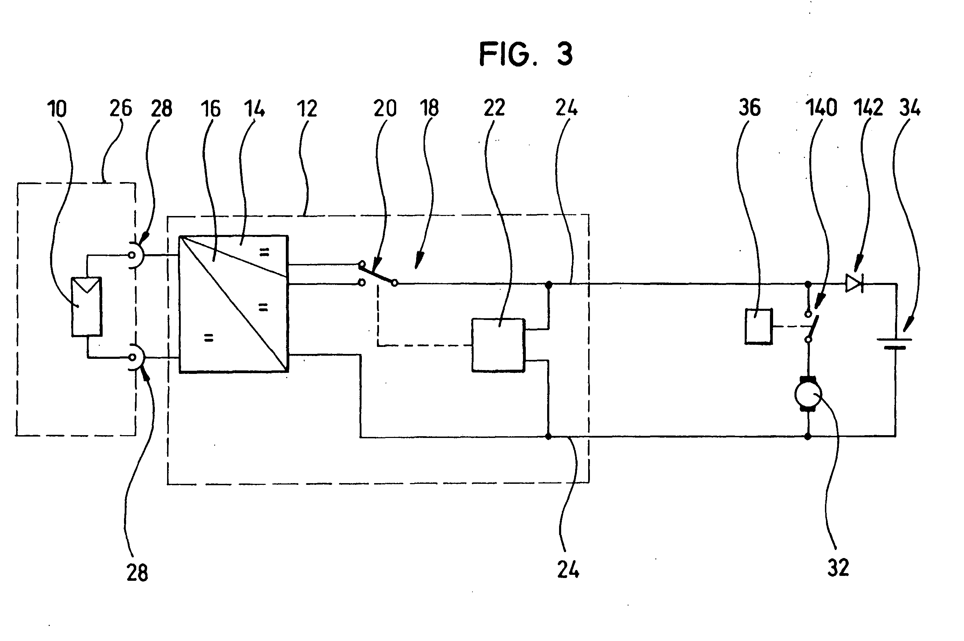

In Fig. 3 ist eine Abwandlung der Ausführungsform gemäß Fig. 2 gezeigt, wobei der wesentliche Unterschied darin besteht, dass im Gegensatz zu Fig. 2 nur der Solargenerator 10 in den Deckel 26 integriert ist, nicht jedoch die Impedanzwandlereinheit 12. Dadurch liegen die Solarkontakte 28 nicht am Ausgang 24 der Impedanzwandlereinheit 12, sondern sie liegen zwischen dem Solargenerator 10 und dem Eingang der Impedanzwandlereinheit 12. Es versteht sich, dass auch die Ausführungsform gemäß Fig. 1 bezüglich der Anordnung der Solarkontakte 28 in der Art der Ausführungsform von Fig. 3 ausgebildet sein kann.

## Patentansprüche

1. Solareinrichtung für ein Fahrzeug, mit einem Solargenerator (10) und einer DC/DC-Wandlereinheit (12), wobei die Solareinrichtung zur umschaltbaren Versorgung eines Verbrauchers (32) im Fahrzeug bzw. zum Nachladen der Fahrzeugbatterie (34) vorgesehen ist, **dadurch gekennzeichnet, dass** die DC/DC-Wandlereinheit (12) einen ersten (14) und einen zweiten DC/DC-Wandler (16) umfasst, deren Wirkung hinsichtlich der Versorgungsfunktion des Verbrauchers (32) bzw. der Nachladefunktion optimiert ist, wobei eine Umschalteinheit (18) vorgesehen ist, welche die Spannung am Ausgang (24) der DC/DC-Wandlereinheit erfasst und den Ausgang (24) in Abhängigkeit von der erfassten Spannung auf den ersten (14) bzw. den zweiten DC/DC-Wandler (16) schaltet.

2. Solareinrichtung gemäß Anspruch 1, **dadurch gekennzeichnet, dass** der Solargenerator (10), die DC/DC-Wandlereinheit (12) und die Umschalteinheit (18) in einen Solardeckel (26) im Fahrzeugdach integriert sind, wobei der Ausgang (24) der DC/DC-Wandlereinheit auf zwei deckelseitige Solarkontakte (28) geführt ist.

3. Solareinrichtung gemäß Anspruch 1, **dadurch gekennzeichnet, dass** der Solargenerator (10) in einen Solardeckel (26) im Fahrzeugdach integriert ist und die DC/DC-Wandlereinheit (12) und die Umschalteinheit (18) fahrzeugfest außerhalb des Deckels angeordnet sind, wobei der Ausgang des Solargenerators auf zwei deckelseitige Solarkontakte (28) geführt ist.

4. Solareinrichtung gemäß einem der vorhergehenden Ansprüche, **dadurch gekennzeichnet, dass** es sich bei dem Verbraucher (32) um einen Lüftermotor handelt.

5. Solareinrichtung gemäß einem der vorhergehenden Ansprüche, **dadurch gekennzeichnet, dass** der der Versorgungsfunktion zugeordnete DC/DC-Wandler (14) als Abwärtswandler ausgebildet ist.

6. Solareinrichtung gemäß einem der vorhergehenden Ansprüche, **dadurch gekennzeichnet, dass** der der Nachladefunktion zugeordnete DC/DC-Wandler (16) als Aufwärtswandler ausgebildet ist.

7. Solareinrichtung gemäß einem der vorhergehenden Ansprüche, **dadurch gekennzeichnet, dass** die Umschalteinheit (18) so ausgebildet ist, dass sie bei einer an dem Ausgang (24) der DC/DC-Wandlereinheit (12) erfassten Spannung von 0 V bis etwa zur halben Bordnetz - Nennspannung den Ausgang der DC/DC-Wandlereinheit auf den der Versorgungsfunktion zugeordneten DC/DC-Wandler (14) schaltet.

8. Solareinrichtung gemäß einem der vorhergehenden Ansprüche, **dadurch gekennzeichnet, dass** die Umschalteinheit (18) so ausgebildet ist, dass sie bei einer an dem Ausgang (24) der DC/DC-Wandlereinheit (12) erfassten Spannung von etwas mehr als der halben Bordnetz - Nennspannung bis zur maximal zulässigen Spannung den Ausgang der DC/DC-Wandlereinheit auf den der Nachladefunktion zugeordneten DC/DC-Wandler (16) schaltet.

9. Solareinrichtung gemäß einem der vorhergehenden Ansprüche, **dadurch gekennzeichnet, dass** der Verbraucher (32) parallel zu der Fahrzeugbatterie (34) geschaltet ist, wobei im Pfad des Verbrauchers ein Schalter (140) vorgesehen ist.

10. Solareinrichtung gemäß Anspruch 9, **dadurch gekennzeichnet, dass** der Schalter (140) in Abhängigkeit von der Temperatur im Fahrzeuginnenraum betätigt wird.

11. Solareinrichtung gemäß Anspruch 9 oder 10, **dadurch gekennzeichnet, dass** im Pfad der Fahrzeugbatterie (34) eine Sperrdiode (142) vorgesehen ist, die so gepolt und dimensioniert ist, dass eine Entladung der Fahrzeugbatterie über den Verbraucher (32) oder den Solargenerator verhindert wird.

12. Solareinrichtung gemäß einem der Ansprüche 1 bis 10, **dadurch gekennzeichnet, dass** eine Steuereinheit (30) vorgesehen ist, welche die von der DC/DC-Wandlereinheit (12) abgegebene Solarleistung nach vorgegebenen Kriterien zwischen der Fahrzeugbatterie (34) und dem Verbraucher (32) verteilt.

## Claims

1. Solar energy installation for a vehicle, having a solar generator (10) and a DC/DC converter unit (12), the solar energy installation being provided for the controllable supply of a load (32) in the vehicle or for recharging the vehicle battery (34), **characterized in that** the DC/DC converter unit (12) comprises a first (14) and a second DC/DC converter (16), the action of which is optimized with respect to the supply function of the load (32) and the recharging function, a switching unit (18) being provided, which registers the voltage at the output (24) of the DC/DC converter unit and switches the output (24) to the first (14) or the second DC/DC converter (16) as a function of the voltage registered.

2. Solar energy installation according to Claim 1, **characterized in that** the solar generator (10), the DC/DC converter unit (12) and the switching unit (18) are integrated into a solar panel (26) in the vehicle roof, the output (24) of the DC/DC converter unit being led to solar contacts (28) on the panel side.

3. Solar energy installation according to Claim 1, **characterized in that** the solar generator (10) is integrated into a solar panel (26) in the vehicle roof, and the DC/DC converter unit (12) and the switching unit (18) are arranged fixed to the vehicle outside the panel, the output of the solar generator being led to two solar contacts (28) on the panel side.

4. Solar energy installation according to one of the preceding claims, **characterized in that** the load (32) is a fan motor.

5. Solar energy installation according to one of the preceding claims, **characterized in that** the DC/DC converter (14) assigned to the supply function is configured as a step-down converter.

6. Solar energy installation according to one of the preceding claims, **characterized in that** the DC/DC converter (16) assigned to the recharging function is configured as a step-up converter.

7. Solar energy installation according to one of the preceding claims, **characterized in that** the switching unit (18) is configured in such a way that, in the case of a voltage registered at the output (24) of the DC/DC converter unit (12) of 0 V to about half the on-board network nominal voltage, it switches the output of the DC/DC converter unit to the DC/DC converter (14) assigned to the supply function.

8. Solar energy installation according to one of the preceding claims, **characterized in that** the switching unit (18) is configured in such a way that, in the case of a voltage registered at the output (24) of the DC/DC converter unit (12) of somewhat more than half the on-board network nominal voltage up to the maximum permissible voltage, it switches the output of the DC/DC converter unit to the DC/DC converter (16) assigned to the recharging function.

9. Solar energy installation according to one of the preceding claims, **characterized in that** the load (32) is connected in parallel with the vehicle battery (34), a switch (140) being provided in the path of the load.

10. Solar energy installation according to Claim 9, **characterized in that** the switch (140) is actuated as a function of the temperature in the vehicle interior.

11. Solar energy installation according to Claim 9 or 10, **characterized in that** a blocking diode (142) is provided in the path of the vehicle battery (34) and is polarized and dimensioned such that the vehicle battery is prevented from discharging via the load (32) or the solar generator.

12. Solar energy installation according to one of Claims 1 to 10, **characterized in that** a control unit (30) is provided, which distributes the solar power output by the DC/DC converter unit (12) between the vehicle battery (34) and the load (32) in accordance with predefined criteria.

## Revendications

1. Dispositif d'énergie solaire pour un véhicule, doté d'un générateur solaire (10) et d'une unité de convertisseurs à courant continu (12), le dispositif d'énergie solaire étant prévu pour alimenter de manière commutable un récepteur (32) dans le véhicule ou pour recharger la batterie du véhicule (34), **caractérisé en ce que** l'unité de convertisseurs à courant continu (12) comprend un premier (14) et un second (16) convertisseurs à courant continu, dont l'action est optimisée en ce qui concerne la fonction d'alimentation du récepteur (32) ou la fonction de recharge, une unité de commutation (18) étant prévue, laquelle détecte la tension à la sortie (24) de l'unité de convertisseurs à courant continu et commute la sortie (24) en fonction de la tension détectée sur le premier (14) ou le second convertisseur à courant continu (16).

2. Dispositif d'énergie solaire selon la revendication 1, **caractérisé en ce que** le générateur solaire (10), l'unité de convertisseurs à courant continu (12) et l'unité de commutation (18) sont intégrés dans un panneau solaire (26) dans le toit du véhicule, la sortie (24) de l'unité de convertisseurs à courant continu donnant sur deux contacts solaires (28) côté panneau.

3. Dispositif d'énergie solaire selon la revendication 1, **caractérisé en ce que** le générateur solaire (10) est intégré dans un panneau solaire (26) dans le toit du véhicule et l'unité de convertisseurs à courant continu (12) et l'unité de commutation (18) sont disposées de manière fixée au véhicule en dehors du panneau, la sortie du générateur solaire donnant sur deux contacts solaires (28) côté panneau.

4. Dispositif d'énergie solaire selon l'une quelconque des revendications précédentes, **caractérisé en ce qu'**il s'agit pour le récepteur (32) d'un moteur à ventilateurs.

5. Dispositif d'énergie solaire selon l'une quelconque des revendications précédentes, **caractérisé en ce que** le convertisseur à courant continu (14) associé à la fonction d'alimentation est réalisé comme un convertisseur abaisseur.

6. Dispositif d'énergie solaire selon l'une quelconque des revendications précédentes, **caractérisé en ce que** le convertisseur à courant continu (16) associé à la fonction de recharge est réalisé comme un convertisseur élévateur.

7. Dispositif d'énergie solaire selon l'une quelconque des revendications précédentes, **caractérisé en ce que** l'unité de commutation (18) est réalisée de telle sorte qu'elle commute la sortie de l'unité de convertisseurs à courant continu sur le convertisseur à courant continu (14) associé à la fonction d'alimentation lorsque la tension détectée sur la sortie (24) de l'unité de convertisseurs à courant continu (12) va de 0 V jusqu'à à pou près la moitié de la tension nominale du réseau électrique de bord.

8. Dispositif d'énergie solaire selon l'une quelconque des revendications précédentes, **caractérisé en ce que** l'unité de commutation (18) est réalisée de telle sorte qu'elle commute la sortie de l'unité de convertisseurs à courant continu sur le convertisseur à courant continu (16) associé à la fonction de recharge lorsque la tension détectée sur la sortie (24) de l'unité de convertisseur à courant continu (12) va d'un peu plus que la moitié de la tension nominale du réseau électrique de bord jusqu'à une tension maximale autorisée.

9. Dispositif d'énergie solaire selon l'une quelconque des revendications précédentes, **caractérisé en ce que** le récepteur (32) est monté parallèlement à la batterie du véhicule (34), un commutateur (140) étant prévu dans le chemin du récepteur.

10. Dispositif d'énergie solaire selon la revendication 9, **caractérisé en ce que** le commutateur (140) est actionné en fonction de la température à l'intérieur du véhicule.

11. Dispositif d'énergie solaire selon la revendication 9 ou 10, **caractérisé en ce que** dans le chemin de la batterie du véhicule (34) est prévue une diode de blocage (142) qui est polarisée et dimensionnée de telle sorte qu'une décharge de la batterie de véhicule soit empêchée par le biais du récepteur (32) ou du générateur solaire.

12. Dispositif d'énergie solaire selon l'une quelconque des revendications 1 à 10, **caractérisé en ce qu'**une unité de commande (30) est prévue, laquelle répartit la puissance solaire dégagée par l'unité de convertisseurs à courant continu (12) selon des critères prescrits entre la batterie du véhicule (34) et le récepteur (32).
